# EUROPEAN PATENT SPECIFICATION

(11) **EP 3 422 142 B1**
(45) Date of publication and mention of the grant of the patent: **14.07.2021**
(21) Application number: 17179045.4
(22) Date of filing: 30.06.2017
(51) Int. Cl.: G06F 1/26, G06F 1/30, H02H 3/20

(54) **METHOD FOR PROVIDING ELECTRIC POWER TO AN INTERFACE CARD AND SAFE STATE CONTROLLER**
VERFAHREN ZUR BEREITSTELLUNG VON ELEKTRISCHEM STROM AN EINE SCHNITTSTELLENKARTE UND EIN STEUERGERÄT FÜR DEN SICHEREN ZUSTAND
PROCÉDÉ POUR FOURNIR DE L'ÉNERGIE ÉLECTRIQUE À UNE CARTE D'INTERFACE ET CONTRÔLEUR D'ÉTAT DE SÉCURITÉ

(43) Date of publication of application: 02.01.2019
(73) Proprietor: duagon AG, 8953 Dietikon (CH)
(72) Inventor: Nair, Ragesh, 8902 Urdorf (CH); Knaus, Marco, 8953 Dietikon (CH); Ratajski, Michal, 5103 Möriken (CH); Leuenberger, David, 8008 Zürich (CH); Robert, Marc, 8102 Oberengstringen (CH)
(74) Representative: Hentrich Patentanwälte PartG mbB

(56) References cited:
- EP-A1- 2 131 468
- US-A1- 2005 177 780
- US-A1- 2014 223 037
- US-A1- 2015 058 652

## Description

### BACKGROUND

The present invention relates to a method for controlling electric power provided to an interface card and relates to a safe state controller for controlling electric power provided to an interface card. In particular the present invention relates to a method and a safe state controller used within train communication networks (TCN). The TCN is normally built of different communication network options, especially of wire train bus (WTB) and multifunction vehicle bus (MVB). Additionally a controller area network (CAN-bus) and/or Ethernet (ETH) may be provided.

The present invention is used in relation to interface cards having a safety-related function. A safety related function may for example be necessary for an interface card that connects a safety-related host device to the TCN. In one example the safety-related host device is a brake control host device including a brake controller. Another safety-related host device may be a door controlling device including a door controller or a motor controlling device including a motor controller. For these safety-related host devices it has to be ensured, that there exists the possibility to change to a safe state mode, which is adopted in case of a failure (e.g. a component failure, a soft-error, etc).

Depending on the severity of the failure different actions may be required or may be desired. Therefore, failures may at least be categorized into low severity failures and into high severity failures. A low severity failure may be a soft-error, e.g. a single event upset (SEU) inside the volatile memory, which is not related to a defective hardware component. A high severity failure may be a component or hardware failure, especially resulting from an over-voltage of the device. In cases of such a high severity failure it is assumed, that the interface card is damaged which connects the host device to the TCN. Or in other words, in this scenario, it is assumed that the interface card is no longer working properly.

US 2005 / 0 177 780 A1 describes an interface card with a power supply which includes a power module and a power charging module. The power module provides power to the host when the power supply of the host connected to the interface card is malfunctioning. When the capacity of the power module is insufficient, it is recharged by the host power supply via the power charging module. If anything goes wrong with the power supply to the host, the backup power management program notifies the control module of the interface card so that the control module can control the power module to start supplying power to the host.

US 2014 / 0 223 037 A1 explains a technique for detecting connection of a host device by an accessory device. The method includes the accessory device measuring the voltage as a function of time at the contact and determining whether the measured voltage at the contact reaches or exceeds a threshold voltage prior to, at, or after expiration of a predetermined time. If the measured voltage meets or exceeds the threshold voltage prior to the expiration of the predetermined time the accessory device concludes that the host device is not connected to the accessory device and if the measured voltage meets or exceeds the threshold voltage at or after expiration of the predetermined time, the accessory device concludes that the host device is connected to the accessory.

EP 2 131 468 A1 discusses a device having a design for the protection against transients over voltages, temporary and permanent over voltages. Whenever a temporary or permanent over voltage in the supply voltage for a period exceeding the established time occurs, the switching device switches to open. This leaves the installation and loads connected downstream to it without supply, avoiding their damage or destruction.

US 2015 / 058 652 A1 describes a network appliance apparatus conveys communication signals over a communication network and is constructed from a communication circuit and a power conditioning circuit in a common housing. The power conditioning circuit conditions alternating current (AC) electrical power and it is determined which power criteria are met by the conditioned electrical power. The conditioned electrical power is selectively provided to the communication circuit in response to one of the power criteria being met such that the conditioned electrical power is removed from the communication circuit when another of the power criteria is met.

It is therefore an object of the present invention to provide an improved method for controlling electric power provided to an interface card and to provide an improved safe state controller for controlling electric power provided to an interface card within a communication network.

### SUMMARY OF THE INVENTION

These problems are solved by a method according to claim 1 and by a safe state controller according to claim 2. A preferred embodiment is mentioned in the dependent claim.

Hence, a method is provided for controlling electric power provided to an interface card. The interface card connects one or more host devices to one or more network devices within a communication network, preferably within a train communication network. The method comprises the step of providing a connecting device which in a normal operation mode connects the interface card to a power source thereby providing electrical power to the interface card. Additionally, a failure detection unit for low severity failures and/or for high severity failures is provided, whereas the failure detection unit being at least indirectly linked to the connecting device. Upon detection of a low severity failure and/or a high severity failure by the failure detection unit, the connecting device is changing to a safe state mode in which the connecting device cuts off the power of said power source from the interface card. The interface card and the safe state controller, especially its connecting device may be formed in one piece.

The energy storage unit is connected to the connecting device, wherein the energy storage unit is discharged or gets discharged in the normal operation mode. In the safe state mode the energy storage unit is or gets charged until at least a treshold voltage is provided to the connecting device thereby cutting off the power source from the interface card. Depending on the appropriate selection of an energy storage unit the negation time may be positively influenced. The negation time is the time span which begins when the existence of a fault is detected and ends when the safe state is enforced.

Accordingly, the energy storage unit in one embodiment is a capacitor. Other energy storage units, such as an accumulator may also be used.

The safe state mode includes a first safe state mode. This first safe state mode enables the connecting device to reconnect the power source to the interface card thereby providing electrical power to the interface card, again. The first safe state mode is therefore also known as a temporarily cut off mode. In this first safe state mode the electric power is only temporarily cut off from the interface card and may be reconnected to it.

A first safe state circuit is provided which includes a first semiconductor switching device, such as a first transistor. Upon detection of a low severity failure by the detection unit the first semiconductor switching device is powered thereby activating the first safe state mode. Upon activation of the first safe state circuit, the first safe state mode is activated, too. This has the effect, that an electronic trigger signal or a trigger voltage may be provided to a semiconductor switching device thereby initiating the first safe state mode.

The method may include the additional step of taking off the power from the first semiconductor switching device, thereby deactivating the first safe state circuit and deactivating the first safe state mode. This brings the connecting device and therefore the whole system back to normal operation mode. In yet another embodiment, the normal operation mode is only obtainable upon disconnecting or turning off of the power source and upon reapplying it again.

The safe state mode includes a second safe state mode, whereas the connecting device is unable to reconnect the power source to the interface card in the second safe state mode. The second safe state mode is therefore also known as a permanent cut off mode. This has the effect, that the interface card is no longer powered. Transfer of signals between the host device and the (train) communication network devices are inhibited.

A second safe state circuit is provided which includes a second semiconductor switching device, such as a second transistor. Upon detection of a high severity failure by the failure detection unit, the second semiconductor switching device is powered thereby activating the second safe state mode. Upon activation of the second safe state circuit a fuse is blown. This has the effect, that the connecting device is maintained in the second safe state mode. Hence, in this situation, the connecting device is not able to reconnect the power source to the interface card. This ensures, that no signal transmission between the safety-related host device and the (train) communication network devices via the interface card occurs, or may occur in future.

The safe state controller controls electric power provided to an interface card and comprises a connecting device which in a normal operation mode connects the interface card to a power source thereby providing electrical power to the interface card. The connecting device is at least indirectly linkable or linked to a failure detection unit. The connecting device is switchable or changeable into a safe state mode in which the connecting device cuts off the power source from the interface card upon detection of a low severity failure and/or a high severity failure by the failure detection unit. With this safe state controller it is possible to disconnect a safety-related host device from the (train) communication network devices. This has the effect of inhibiting the transmission of erroneous or incorrect signals via the interface card upon detection of a failure.

The connecting device is switchable or changeable between the normal operation mode and the safe state mode by or with the help of voltage provided from an energy storage unit. The energy storage unit is configured to be discharged or to get discharged in the normal operation mode. It is configured to be or to get charged in the safe state mode at least up to a threshold voltage which is provided to the connecting device. Upon providing the threshold voltage to the connecting device the connecting device stops conducting and therefore cuts the power source off from the interface card.

In another example, the connecting device is a p-channel MOSFET (metal-oxide-semiconductor field effect transistor). This MOSFET is regularly a four-terminal device with source (S), gate (G), drain (D) and body (B) terminals. The body (or substrate) of the MOSFET is connected to the source terminal making it a three-terminal device like other field-effect transistors. The gate of the MOSFET is connected to the energy storage unit. The energy storage unit thereby provides a source-gate-voltage when it is charged. The source is connected or connectable to the power supply and the drain is connected or connectable to the interface card. Since the MOSFET is a p-channel MOSFET it is conducting when the gate-source voltage is below a predetermined threshold voltage. When the gate-source-voltage reaches the threshold voltage, the MOSFET is initiating the safe state mode, i.e. gets non-conducting, thereby cutting the power source off from the interface card. Since no electric power is fed to the interface card, there is no signal transmission between one or more host devices and one or more network devices anymore.

The safe state mode includes a first safe state mode and a first safe state circuit is provided. This first safe state circuit is inactive in normal operation mode and it is activated upon the detection of a low severity failure thereby reversibly changing the connecting device into the (temporarily) first safe state mode. The first safe state circuit may be triggered or powered separately by a first trigger circuit.

The first safe state circuit comprises a first semiconductor switching device, such as a first transistor whose gate may be triggered (e.g. by providing current). This first semiconductor switching device is configured to activate the first safe state circuit upon detection of a low severity failure by the failure detection unit.

The safe state mode includes a second safe state mode, whereas a second safe state circuit is provided. This second safe state circuit is also inactive in normal operation mode. It is activated upon detection of a high severity failure thereby irreversibly changing the connecting device into the (permanent) second safe state mode. A typical situation for the second safe state mode is an over-voltage provided to the interface card. In these situations it is assumed, that the interface card is not working properly anymore and safety-related host devices have to be disconnected from the (train) communication network devices. The second safe state circuit may be triggered or powered separately by a second trigger circuit.

The second safe state circuit comprises the second semiconductor switching device, such as a second transistor whose gate may be triggered (e.g. by providing current). The second semiconductor switching device is configured to activate the second safe state circuit and therefore the second safe state mode upon detection of a high severity failure by the failure detection unit.

The safe state mode includes a reversible first safe state mode and an irreversible second safe state mode. In the first safe state mode the connecting device is able to reconnect the power source to the interface card, whereas in the second safe state mode it is no longer possible to provide power to the interface card from the power source. To realize the cut off, a fuse is provided that is configured to the blown in the second safe state mode. The fuse is configured not to be blown in the first safe state mode. Thereby, the interface card may be reconnected to the power source upon clearance of the detected low severity failure(s), whereas it is impossible to reconnect the interface card to the power source upon detection of a high severity failure.

Other variations of the invention will become apparent in the light of the following detailed description of the exemplary embodiments, as illustrated in the accompanying drawings.

### BRIEF DESCRIPTION OF THE DRAWINGS

- Fig. 1: depicts a simplified view to a safety-related system with an example safe state controller connecting a power source to an interface card, the interface card connecting one or more host devices to one or more network devices within a communication network,
- Fig. 2: depicts a view to another illustrative non-claimed embodiment of a safe state controller,
- Fig. 3: depicts a more detailed view to a safe state controller connecting a power source to an interface card,
- Fig. 4: depicts a trigger circuit for triggering a first semiconductor switching device, and
- Fig. 5: depicts a second trigger circuit for triggering a second semiconductor switching device, and
- Fig. 6: an interface card system comprising an safe state controller integrally built with an interface card.

### DETAILED DESCRIPTION

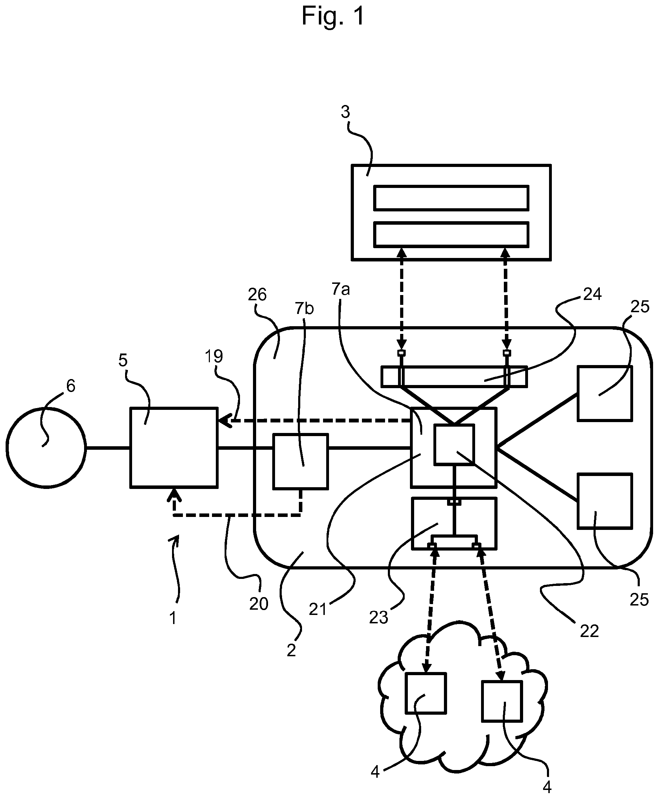

Referring now to fig. 1, a safe state controller 1 is shown which connects an interface card 2 to a power source 6. In the exemplary embodiment the interface card 2 provides a reconfigurable logic device, such as a field programmable gate array (FPGA) 21. According to one aspect of the FPGA 21, it incorporates a CPU 22 that is configured to run a real time operating system. Additionally, some embedded applications may be stored to a memory of the FPGA 21 which may also be loaded into and run on the CPU 22. Further, the interface card 2 provides a digital interface module 23 or field bus interface. The digital interface module 23 is preferably a switch, which, according to another aspect of the interface card 2, is formed as three-port Ethernet switch. This switch connects one or more network devices 4 to the interface card 2. The signals provided to the digital interface module 23 may be processed within the CPU 22 and may be (after processing) transmitted to a host device 3 via a network interface module 24, which, in the exemplary embodiment, is a two channel digital up convertor. The host device 3 may be a brake device incorporating a brake controller. In another embodiment the host device 3 is a door controller or a light controller or a climate system controller etc.. Additionally, the interface card 2 may comprise other or additional components 25.

The safe state controller 1 comprises a connecting device 5 which in a normal operation mode connects the interface card 2 to a power source 6 thereby providing electrical power to the interface card 2. The connecting device 5 is also linked to a failure detection unit 7a, 7b. In the present example, the failure detection unit 7a, 7b comprises two parts, namely a failure detection unit 7a for low severity failure detection (e.g. soft-error) and a failure detection unit 7b for high severity failure detection (e.g. over-voltage). In the exemplary embodiment, the FPGA 21 incorporates the failure detection unit 7a for low severity failure detection. The failure detection unit 7b for high severity failure detection is provided on the circuit board 26 of the interface card 2, too, but separately from the FPGA 21. Upon detection of a low severity failure and/or a high severity failure by the failure detection unit 7a, 7b, the connecting device 5 is switched or changed into a safe state mode in which the connecting device 5 cuts off the power source 6 from the interface card 2. Cutting off the power source 6 from the interface card 2 results in a deactivation of the digital interface module 23 and/or the network interface module 24. Or, in other words, the digital interface module 23 and/or the network interface module 24 are set inactive in the safe state mode.

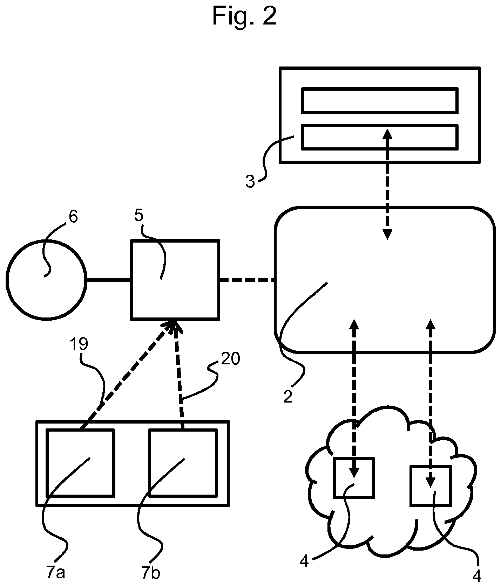

Referring now to fig. 2, a more simplified construction of a safe state controller 1 with an alternative failure detection unit 7a, 7b is shown. In this non-claimed embodiment, the failure detection unit 7 is arranged independently from the interface card 2 and includes both the failure detection unit 7a for low severity failure detection (e.g. a soft-error) and the failure detection unit 7b for high severity failure detection (e.g. an over-voltage).

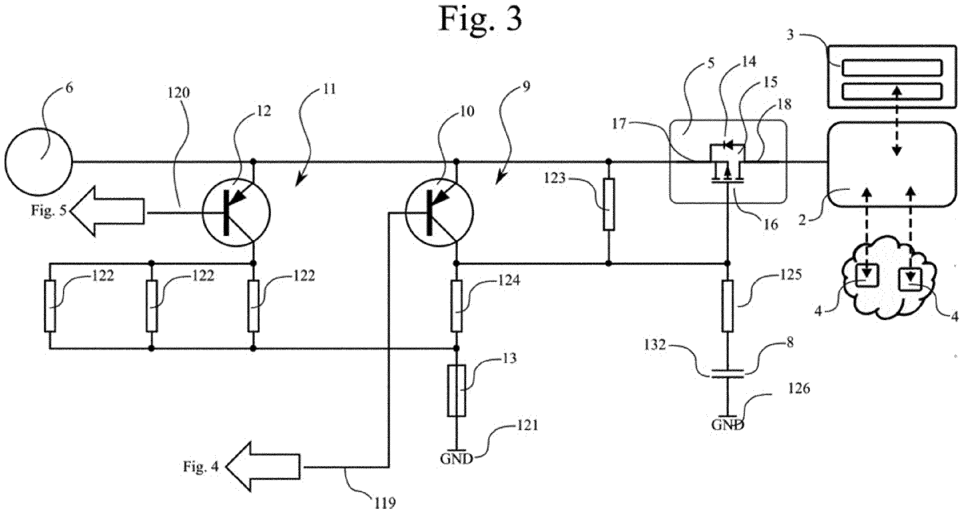

Turning to fig. 3, a more detailed view on the exemplary safe state controller 1 is shown. As already discussed above, this safe state controller 1 is configured to detect and to react to two different types of failures. It hence incorporates two different safe state modes, the first safe state mode and the second safe state mode. Within the first safe state mode it is possible to get back to normal operation mode, in which the connecting device 5 connects the power source 6 to the interface card 2 by turning off or disconnecting the power source 6 and reapplying it again. In the second safe state mode the power source 6 is permanently cut off from the interface card 2. Reconnecting is not possible without major (human) intervention, i.e. manual rework.

In the following the normal operation mode will be described in more detail. In the embodiment of fig. 3 the connecting device 5 is formed as a P-channel MOSFET 15 comprising a gate 16, a source 17 and a drain 18. The MOSFET 15 comprises also a body diode 14. An energy storage unit 8, according to the present embodiment a capacitor, is connected to the gate 16 of the MOSFET 15 via resistor 125. In normal operation mode the energy storage unit 8 is discharged or gets discharged via ground 121. In this configuration the current is led via a fuse 13 to ground 121. Hence, no voltage or a voltage beneath a threshold voltage is provided between the source 17 of the MOSFET 15 and the gate 16 of the MOSFET 15. Therefore, in normal operation mode the P-channel MOSFET 15 is conducting between its source 17 and its drain 18. In the exemplary embodiment the source 17 is connected to the power source 6 and the interface card 2 is connected to the drain 18 of the MOSFET 15. The electrical power of the power source 6 is fed via the connecting device 5 to the interface card 2 in normal operation mode.

The safe state controller 1 additionally comprises a first safe circuit 9 and a second safe state circuit 11. The first safe state circuit 9 comprises a first semiconductor switching device 10 which is formed as a first transistor comprising a base, a collector and an emitter. The second safe state circuit 11 includes a second semiconductor switching device 12, which is formed as a second transistor including a base, a collector and an emitter, accordingly. Both safe state circuits 9, 11 are inactive and their semiconductor switching devices 10, 12 are not conducting in normal operation mode.

In the following the first safe state mode will be descibed in more detail. When a low severity failure is detected by the failure detection unit 7a, the first semiconductor switching device 10 is powered by providing current to its base via a trigger line 119. Upon activation of the first safe state circuit 9 the energy storage unit 8 gets charged thereby providing a voltage exceeding a predetermined threshold voltage at the gate 16 of the P-channel MOSFET 15. In the present exemplary embodiment, the threshold voltage between the gate 16 and the source 17 of the MOSFET 15 is -0,5V. Then, the connecting device 5 is not conducting anymore and the power source 6 is cut off from the interface card. Thereby, the digital interface module 23 and/or the network interface module 24 are set inactive to prevent any signal transmission via the interface card 2. In the present exemplary embodiment, the base current of the first semiconductor switching device 10 has to exceed 150µA to activate the first safe state circuit 9.

In the first safe state mode, the fuse 13 is not blown. Because of this, the energy storage unit 8 gets discharged via fuse 13 to ground 121, when the first semiconductor switching device 10 and/or the first safe state circuit 9 gets inactive again. The gate-source-voltage decreases below the threshold voltage and the p-channel MOSFET 15 begins to conduct again thereby reconnecting the power source 6 to the interface card 2. Hence, the first safe state mode is also known as a temporarily cut off mode.

In the following the second safe state mode will be described in more detail. In case of the detection of a high severity failure, the second semiconductor switching device 12 gets activated via trigger line 120. When the second semiconductor switching device 12 starts conducting, the second safe state circuit 11 is activated, too. Upon activation of the second safe state circuit 11 the fuse 13 is blown. In the present embodiment, the fuse 13 may be blown by a fuse current of 120mA. Again, the energy storage unit 8 gets charged at least up to the threshold voltage between the gate 16 and the source 17 of the P-channel MOSFET 15. In this situation, the connecting device 5 stops conducting and the power source 6 is cut off from the interface card 2. Thereby, the digital interface module 23 and/or the network interface module 24 are set inactive to prevent any signal transmission via the interface card 2. In the present exemplary embodiment, the base current of the second semiconductor switching device 12 has to exceed 150µA to activate the second safe state circuit 11.

Since the fuse 13 is blown in the second safe state mode, there is no possibility for the energy storage unit 8 to get discharged via ground 121 again. This is why the safe state controller 1 no longer has the possibility to revert to the normal operation mode, because the gate-source-voltage of the MOSFET 15 will not decrease below the predetermined threshold voltage again. The power source is permanently cut off from the interface card 2.

Hence, the second safe state mode is also known as a permanent cut off mode.

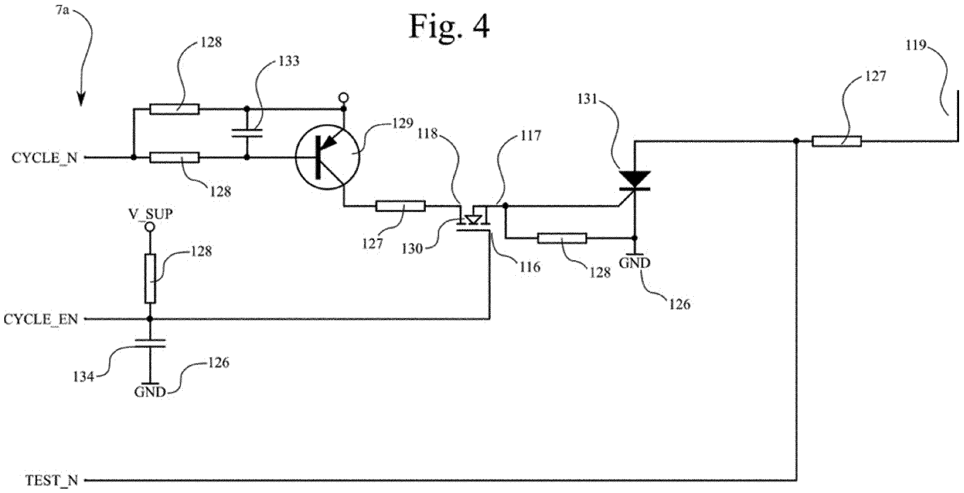

Referring now to fig. 4, the first semiconductor switching device may - according to one embodiment - be triggered via trigger line 119 in two ways. Either by triggering, i.e. pulling low of TEST_N or by triggering, i.e. pulling low of CYCLE_N. Hereto, a possible first trigger circuit for the first safe state mode is depicted.

When TEST_N is pulled low, a self-test of the safe state controller 1, in particular of the connecting device 5 may be performed. In this situation, the first semiconductor switching device 10 (fig. 3) starts conducting, thereby preventing the connecting device 5 from conducting, thereby cutting off the driving logic for TEST_N from the power supply. Subsequently the first semiconductor switching device 10 stops conducting, putting the connecting device 5 back to the conducting mode. Therefore, the interface card 2 is repowered again.

When CYCLE_N is pulled low, the transistor 129 shown in fig. 4 starts conducting, whereas a gate 116 of a thyristor 131 is triggered. The first semiconductor switching device 10 (fig. 3) starts conducting, thereby changing into the first safe state mode. The first safe state mode is maintained as long as there is a current flowing through the first semiconductor switching device 10 and thyristor 131. Therefore, switching back to normal operating mode is only possible by turning off or disconnecting the power source 6 and reapplying it again.

By triggering CYCLE_EN, the gate of a N-channel FET 130 shown in fig. 4 may inhibit the trigger signal of the thyristor 131. This may be necessary during start-up procedures when certain on-board modules falsely indicate a failure (e.g. under-voltage indication from a voltage supervisor). This may leave for a predetermined time period, which according to one embodiment may be larger than 30msec. Within this predetermined time period any CYCLE_N triggers may be inhibited. Inhibiting the trigger signal is especially important when performing a self-test of the connecting device 5 via TEST_N. If the interface card 2 is repowered again after a self-test, false failure indications are issued similarly to a regular start-up procedure.

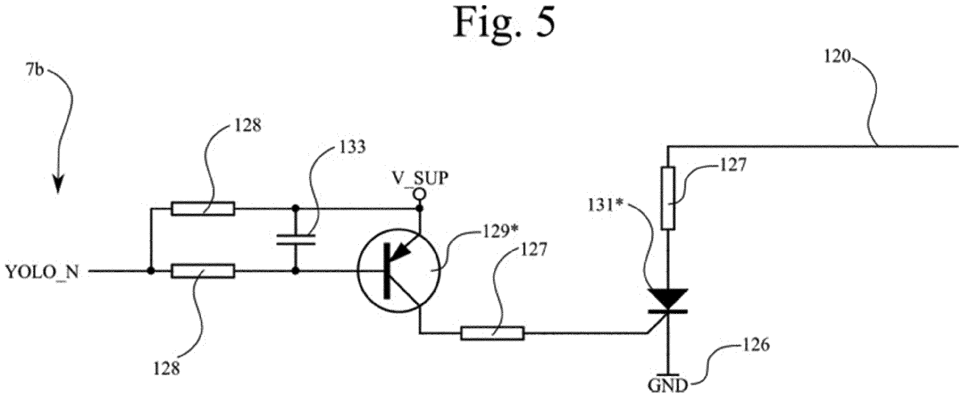

Turning now to fig. 5, the second semiconductor switching device 12 may - according to yet another embodiment - be triggered via trigger line 120. Hereto, a possible trigger circuit for the second safe state mode is depicted.

If YOLO_N is triggered, i.e. pulled low, the transistor 129* shown within the second trigger circuit starts conducting. The required trigger voltage is applied to a thyristors 131* gate 116* of the second trigger circuit. Thereby current is provided via trigger line 120 to the second semiconductor switching device 12. When the second semiconductor switching device 12 starts conducting, the fuse 13 (fig. 3) is blown, and the energy storage unit 8 is charged thereby cutting off the power source 6 from the interface card 2. Since fuse 13 is blown, the second safe state mode is maintained, even when a power cycle is performed.

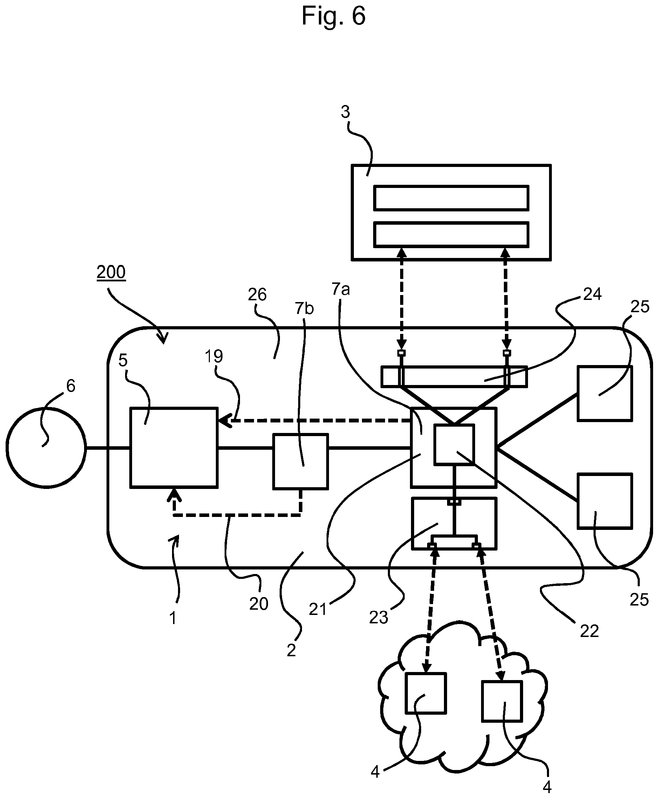

Fig. 6 depicts an interface card system 200 comprising an safe state controller 1 which is integrally built with an interface card 2. The safe state controller 1, its connecting device 5 and the interface card 2 comprise the same features like the embodiment of figs. 1 to 5. Therefore, reference is hereby made to the relating text mentioned above.

The preceeding description is exemplary rather than limiting in nature. Deviations and modifications to the disclosed examples may be apparent to those skilled in the art. They do not necessarily depart from the essence of the present invention as defined in the appended claims.

### LIST OF REFERENCES

- 1: safe state controller
- 2: interface card
- 3: host device
- 4: network device
- 5: connecting device
- 6: power source (e.g. V_{IN} = 5,5V)
- 7a: failure detection unit for low severity failure
- 7b: failure detection unit (voltage supervisor) for high severity failure
- 8: energy storage unit
- 9: first safe state circuit
- 10: first semiconductor switching device
- 11: second safe sate circuit
- 12: second semiconductor switching device
- 13: fuse
- 14: body diode (i.e. overvoltage protection device)
- 15: MOSFET (p-channel MOSFET)
- 16: gate
- 17: source
- 18: drain
- 19: trigger signal (low severity failure)
- 20: trigger signal (high severity failure)
- 21: FPGA (field programmable gate array)
- 22: CPU (central processing unit)
- 23: digital interface module (e.g. field bus interface; e.g. switch; e.g. three-port Ethernet switch)
- 24: network interface module
- 25: component
- 26: circuit board
- 116: gate
- 117: source
- 118: drain
- 119: trigger line (low severity failure)
- 120: trigger line (high severity failure)
- 121: ground (0V)
- 122: resistor (e.g. 68Ω)
- 123: resistor (e.g. 10.000Ω)
- 124: resistor (e.g. 330Ω)
- 125: resistor (e.g. 33Ω)
- 126: ground (0V)
- 127: resistor (e.g. 1.000Ω)
- 128: resistor (e.g. 10.000Ω)
- 129: transistor (e.g. polarity: PNP; e.g. Ptot = 150mW; e.g. V_{CEO} [max] = 45V; e.g. Ic [max] = 100mA; e.g. h_{FE} [min] = 220; e.g. h_{FE} [max] = 475)
- 129*: transistor (e.g. polarity: PNP; e.g. Ptot = 150mW; e.g. V_{CEO} [max] = 45V; e.g. Ic [max] = 100mA; e.g. h_{FE} [min] = 220; e.g. h_{FE} [max] = 475)
- 130: FET (field effect transistor)
- 131: thyristor (e.g. thyristor drop up to 3V; e.g. 3mA holding current; e.g. fuse kill current = 180mA)
- 131*: thyristor (e.g. thyristor drop up to 3V; e.g. 3mA holding current; e.g. fuse kill current = 180mA)
- 132: capacitor (e.g. 4,7µF 25V)
- 133: capacitor (e.g. 10nF 50V)
- 134: capacitor (e.g. 22µF 10V)
- 200: interface card system

## Claims

1. A method for controlling electric power provided to an interface card (2), the interface card (2) connecting one or more host devices (3) to one or more network devices (4) within a communication network, the method comprising:
• providing a connecting device (5) comprising a MOSFET (15) which connects via a drain of the MOSFET (15) the interface card (2) to a power source (6) via a source of the MOSFET (15) thereby providing electrical power to the interface card (2) in a normal operation mode;
• providing a first semiconductor switching device (10) and a second semiconductor switching device (12) whose respective drains are connected to a fuse (13) in parallel with an energy storage unit (8), wherein the energy storage unit (8) is also connected to a gate of the MOSFET (15);
• providing a failure detection unit (7a; 7b), the failure detection unit (7a; 7b) being linked to the connecting device (5);
• upon detection of a signal indicative of a soft error or an over-voltage by the failure detection unit (7a; 7b), the connecting device (5) changes to a safe state mode in which the connecting device (5) cuts off the power source (6) from the interface card (2),
wherein
• the safe state mode includes a first safe state mode as a temporary cut off mode in case of a soft error by charging the energy storage unit (8) via the first semiconductor switching device (10) and a second safe state mode as a permanent cut off mode in a case of an over-voltage by charging the energy storage (8) via the second semiconductor switching device (12) and blowing up the fuse (13),
- the first safe state mode enabling the connecting device (5) to reconnect the power source (6) to the interface card (2) thereby providing electrical power to the interface card (2) by discharging the energy storage (8) via the fuse (13), and
- in the second safe state mode the connecting device (5) is unable to reconnect the power source (6) to the interface card (2) due to the fact that fuse (13) has been blown up.

2. A safe state controller (1) for controlling electric power provided to an interface card (2), the safe state controller (1) comprising:
• a connecting device (5) comprising a MOSFET (15) which is connectable via a drain of the MOSFET (15) to the interface card (2), and via a source of the MOSFET (15) to a power source (6) thereby providing electrical power to the interface card (2) in a normal operation mode, the connecting device (5) being linkable to a failure detection unit (7a; 7b) for receiving a signal indicative of a soft error or an over-voltage, whereas the connecting device (5) changes into a safe state mode in which the connecting device (5) cuts off the power source (6) from the interface card (2) upon detection of the signal,
• a first semiconductor switching device (10) and a second semiconductor switching device (12) whose respective drains are connected to a fuse (13) in parallel with an energy strorage unit (8), wherein the energy storage unit (8) is also connected to the gate of the MOSFET (15),
wherein
• the safe state mode includes a first safe state mode as a temporary cut off mode in case of a soft error by charging the energy storage unit (8) via the first semiconductor switching device (10) and a second safe state mode as a permanent cut off mode in case of an over-voltage by charging the energy storage unit (8) via the second semiconductor switching device (12) and blowing up the fuse (13),
- the first safe state mode enabling the connecting device (5) to reconnect the power source (6) to the interface card (2) thereby providing electrical power to the interface card (2) by discharging the energy storage unit (8) via the fuse (13), and
- whereas in the second safe state mode the connecting device (5) is unable to reconnect the power source (6) to the interface card (2) due to the fact that the fuse (13) has been blown up.

3. The safe state controller (1) according to claim 2, **characterized in that** the MOSFET (15) is a p-channel MOSFET (15).

## Patentansprüche

1. Verfahren zur Bereitstellung von elektrischem Strom an eine Schnittstellenkarte (2), wobei die Schnittstellenkarte (2) eine oder mehrere Steuergeräte (3) mit einer oder mehreren Netzwerkvorrichtungen (4) innerhalb eines Kommunikationsnetzwerks verbindet, wobei das Verfahren umfasst:
• Bereitstellen einer Verbindungsvorrichtung (5) mit einem MOSFET (15), die über einen Drain des MOSFET (15) die Schnittstellenkarte (2) mit einer Energiequelle (6) über eine Source des MOSFET (15) verbindet, wodurch die Schnittstellenkarte (2) in einem normalen Betriebsmodus mit elektrischer Energie versorgt wird;
• Bereitstellen einer ersten Halbleiterschaltvorrichtung (10) und einer zweiten Halbleiterschaltvorrichtung (12), deren jeweilige Drains mit einer Sicherung (13) parallel zu einer Energiespeichereinheit (8) verbunden sind, wobei die Energiespeichereinheit (8) auch mit einem Ausgang des MOSFET (15) verbunden ist;
• Bereitstellen einer Fehlererkennungseinheit (7a; 7b), wobei die Fehlererkennungseinheit (7a; 7b) mit der Verbindungsvorrichtung (5) verbunden ist;
• bei Erkennung eines Signals eines Soft-Fehlers oder einer Überspannung durch die Fehlererkennungseinheit (7a; 7b), wechselt die Verbindungsvorrichtung (5) in einen sicheren Zustandsmodus, in dem die Verbindungsvorrichtung (5) die Stromquelle (6) von der Schnittstellenkarte (2) trennt,
wobei
• der sichere Zustandsmodus einen ersten sicheren Zustandsmodus als einen temporären Abschaltmodus im Falle eines Soft-Fehlers durch Laden des Energiespeichers (8) über die erste Halbleiterschaltvorrichtung (10) und einen zweiten sicheren Zustandsmodus als einen permanenten Abschaltmodus im Falle einer Überspannung durch Laden des Energiespeichers (8) über die zweite Halbleiterschaltvorrichtung (12) und Durchbrennen der Sicherung (13) umfassend,
- in dem ersten sicheren Zustandsmodus die Verbindungseinrichtung (5) die Energiequelle (6) wieder mit der Schnittstellenkarte (2) verbinden kann, wodurch die Schnittstellenkarte (2) durch Entladen des Energiespeichers (8) über die Sicherung (13) mit elektrischer Energie versorgt wird, und
- im zweiten sicheren Zustandsmodus die Verbindungsvorrichtung (5) nicht in der Lage ist, die Energiequelle (6) wieder mit der Schnittstellenkarte (2) zu verbinden, weil die Sicherung (13) durchgebrannt ist.

2. Safe-State-Controller (1) zum Steuern der einer Schnittstellenkarte (2) zugeführten elektrischen Leistung, wobei die Sicherheitsfunktion (1) umfasst:
• eine Verbindungsvorrichtung (5), die einen MOSFET (15) umfasst, der über einen Drain des MOSFET (15) mit der Schnittstellenkarte (2) und über eine Source des MOSFET (15) mit einer Stromquelle (6) verbindbar ist, wodurch die Schnittstellenkarte (2) in einem normalen Betriebsmodus mit elektrischem Strom versorgt wird, wobei die Verbindungsvorrichtung (5) mit einer Fehlererfassungseinheit (7a; 7b) verbunden werden kann, um ein Signal zu empfangen, das einen schwachen Fehler oder eine Überspannung anzeigt, wobei die Verbindungsvorrichtung (5) in einen Modus mit sicherem Zustand wechselt, in dem die Verbindungsvorrichtung (5) die Energiequelle (6) von der Schnittstellenkarte (2) bei Erkennung des Signals abschaltet,
• eine erste Halbleiterschaltvorrichtung (10) und eine zweite Halbleiterschaltvorrichtung (12), deren jeweilige Drains mit einer Sicherung (13) parallel zu einer Energiespeichereinheit (8) verbunden sind, wobei der Energiespeicher (8) auch mit dem Ausgang des MOSFET (15) verbunden ist,
wobei
• der sichere Zustandsmodus einen ersten sicheren Zustandsmodus als temporären Abschaltmodus im Falle eines schwachen Fehlers durch Laden des Energiespeichers (8) über die erste Halbleiterschaltvorrichtung (10) und einen zweiten sicheren Zustandsmodus als permanenten Abschaltmodus im Falle einer Überspannung durch Laden des Energiespeichers (8) über die zweite Halbleiterschaltvorrichtung (12) und Durchbrennen der Sicherung (13) umfasst,
- wobei in dem ersten sicheren Zustandsmodus die Verbindungsvorrichtung (5) die Energiequelle (6) wieder mit der Schnittstellenkarte (2) verbinden kann, wodurch die Schnittstellenkarte (2) durch Entladen des Energiespeichers (8) über die Sicherung (13) mit Strom versorgt wird, und
- während im zweiten sicheren Zustandsmodus die Verbindungsvorrichtung (5) nicht in der Lage ist, die Energiequelle (6) wieder mit der Schnittstellenkarte (2) zu verbinden, weil die Sicherung (13) durchgebrannt ist.

3. Safe-State-Controller (1) nach Anspruch 2, **dadurch gekennzeichnet, dass** der MOSFET (15) ein p-Kanal-MOSFET (15) ist.

## Revendications

1. Procédé pour réguler de l'énergie électrique fournie à une carte d'interface (2), la carte d'interface (2) raccordant un ou plusieurs dispositifs hôtes (3) à un ou plusieurs dispositifs de réseau (4) dans un réseau de communication, le procédé comprenant :
• une fourniture d'un dispositif de raccordement (5) comprenant un MOSFET (15) qui raccorde, par le biais d'un drain du MOSFET (15), la carte d'interface (2) à une source d'énergie (6) par le biais d'une source du MOSFET (15), ce qui permet de fournir de l'énergie électrique à la carte d'interface (2) dans un mode de fonctionnement normal ;
• une fourniture d'un premier dispositif de commutation à semi-conducteur (10) et d'un second dispositif de commutation à semi-conducteur (12) dont des drains respectifs sont raccordés à un fusible (13) en parallèle avec une unité de stockage d'énergie (8), dans lequel l'unité de stockage d'énergie (8) est également raccordée à une grille du MOSFET (15) ;
• une fourniture d'une unité de détection de panne (7a ; 7b), l'unité de détection de panne (7a ; 7b) étant reliée au dispositif de raccordement (5) ;
• lors d'une détection d'un signal indiquant une erreur soft ou une surtension par l'unité de détection de panne (7a ; 7b), le dispositif de raccordement (5) passe à un mode d'état sûr dans lequel le dispositif de raccordement (5) coupe la source d'énergie (6) depuis la carte d'interface (2),
dans lequel
• le mode d'état sûr inclut un premier mode d'état sûr en tant que mode de coupure temporaire dans le cas d'une erreur soft en chargeant l'unité de stockage d'énergie (8) par le biais du premier dispositif de commutation à semi-conducteur (10) et un second mode d'état sûr en tant que mode de coupure permanente dans un cas d'une surtension en chargeant le stockage d'énergie (8) par le biais du second dispositif de commutation à semi-conducteur (12) et en faisant sauter le fusible (13),
- le premier mode d'état sûr permettant au dispositif de raccordement (5) de raccorder à nouveau la source d'énergie (6) à la carte d'interface (2), ce qui permet de fournir de l'énergie électrique à la carte d'interface (2) en déchargeant le stockage d'énergie (8) par le biais du fusible (13), et
- dans le second mode d'état sûr, le dispositif de raccordement (5) ne peut pas raccorder à nouveau la source d'énergie (6) à la carte d'interface (2) en raison du fait qu'un fusible (13) a sauté.

2. Dispositif de commande d'état sûr (1) pour réguler de l'énergie électrique fournie à une carte d'interface (2), le dispositif de commande d'état sûr (1) comprenant :
• un dispositif de raccordement (5) comprenant un MOSFET (15) qui peut être raccordé, par le biais d'un drain du MOSFET (15), à la carte d'interface (2), et, par le biais d'une source du MOSFET (15), à une source d'énergie (6), ce qui permet de fournir de l'énergie électrique à la carte d'interface (2) dans un mode de fonctionnement normal, le dispositif de raccordement (5) pouvant être relié à une unité de détection de panne (7a ; 7b) pour recevoir un signal indiquant une erreur passagère ou une surtension, tandis que le dispositif de raccordement (5) passe dans un mode d'état sûr dans lequel le dispositif de raccordement (5) coupe la source d'énergie (6) depuis la carte d'interface (2) lors d'une détection du signal,
• un premier dispositif de commutation à semi-conducteur (10) et un second dispositif de commutation à semi-conducteur (12) dont des drains respectifs sont raccordés à un fusible (13) en parallèle avec une unité de stockage d'énergie (8), dans lequel l'unité de stockage d'énergie (8) est également raccordée à la grille du MOSFET (15),
dans lequel
• le mode d'état sûr inclut un premier mode d'état sûr en tant que mode de coupure temporaire dans le cas d'une erreur soft en chargeant l'unité de stockage d'énergie (8) par le biais du premier dispositif de commutation à semi-conducteur (10) et un second mode d'état sûr en tant que mode de coupure permanente dans le cas d'une surtension en chargeant l'unité de stockage d'énergie (8) par le biais du second dispositif de commutation à semi-conducteur (12) et en faisant sauter le fusible (13),
- le premier mode d'état sûr permettant au dispositif de raccordement (5) de raccorder à nouveau la source d'énergie (6) à la carte d'interface (2), ce qui permet de fournir de l'énergie électrique à la carte d'interface (2) en déchargeant l'unité de stockage d'énergie (8) par le biais du fusible (13), et
- tandis que, dans le second mode d'état sûr, le dispositif de raccordement (5) ne peut pas raccorder à nouveau la source d'énergie (6) à la carte d'interface (2) en raison du fait que le fusible (13) a sauté.

3. Dispositif de commande d'état sûr (1) selon la revendication 2, **caractérisé en ce que** le MOSFET (15) est un MOSFET à canal p (15).
